# EUROPEAN PATENT SPECIFICATION

(11) **EP 3 225 808 B1**
(45) Date of publication and mention of the grant of the patent: **03.10.2018**
(21) Application number: 15808440.0
(22) Date of filing: 23.11.2015
(51) Int. Cl.: F02B 21/00, F02B 33/06, F01L 13/08, F02B 41/04, F02B 75/02

(54) **COMPOUND ENGINE**
VERBUNDBRENNKRAFTMASCHINE
MOTEUR COMPOSÉ

(30) Priority: 26.11.2014 ES 201431760
(43) Date of publication of application: 04.10.2017
(73) Proprietor: Denersa S.L., 09004 Burgos (ES)
(72) Inventor: SALAZAR PUENTE, Roberto, E-09004 Burgos (ES)
(74) Representative: Pons
(86) International application number: PCT/ES2015/070842
(87) International publication number: WO 2016/083641

(56) References cited:
- EP-A2- 0 737 800
- DE-A1-102012 103 832
- US-B1- 6 223 846
- US-B1- 6 907 859

## Description

### OBJECT OF THE INVENTION

The present invention relates to a compound engine formed by an internal combustion engine and a gas turbine which has high thermal efficiency and low pollutant emissions since it makes use of the residual heat from the exhaust gases of the internal combustion engine to heat at constant pressure the air which supplies a gas turbine, which, in turn, actuates an electric generator or transmits the energy to the crankshaft of the internal combustion engine.

### BACKGROUND OF THE INVENTION

Currently, internal combustion engines, both those with spark ignition and those with compression ignition, have low thermal efficiency, comprised between 35 and 45% generally.

An important part of the thermal energy of the fuel is lost in the cooling system and the exhaust gases.

This energy evacuated in the exhaust gases is highly relevant and is at temperatures in the order of 1000 ºC, especially in supercharged petrol internal combustion engines, with low cylinder capacity in relation to their power and operating at high effective average pressures, highly used at present due to their better performance.

In this case, the temperatures of the exhaust gases are so high on some occasions that the exhaust manifold is cooled so that the turbo turbine does not work at such high temperatures.

The useful way of lowering the high temperature of the exhaust gases is to extend the expansion stroke, i.e. that the expansion stroke is greater than the compression stroke. These engines are known as overexpanded engines. There are different solutions to perform this overexpansion, such as Atkinson and Miller cycles, where a delayed closure is performed of the intake valve, and the complex mechanical systems wherein the expansion and exhaust strokes are greater than the intake and compression strokes. Another way of obtaining this overexpansion is by installing a turbine in the exhaust manifold which collects part of its energy and it uses it to actuate a high-speed electric generator (electric turbocompound engines) or directing the energy of the turbine towards the crankshaft by means of a speed reducer (mechanical turbocompound engines).

Overexpanded engines obtain an improved performance but they continue to evacuate exhaust gases at high temperatures without making use of them. Furthermore, in some cases of turbocharged engines, the temperature of the exhaust gases must be lowered before entering the turbine.

Patent US7398650 B2 is known which discloses an internal combustion engine comprising a positive displacement supercharger connected to the intake duct to supply compressed air to the engine, and a turbine connected to the exhaust duct to turn the excess energy from the exhaust gases into power, where the turbine is connected to the engine through a reduction gear mechanism and where the supercharger and the turbine are coupled to the engine by means of a pulley mounted on the crankshaft, a second pulley mounted on the shaft of the reduction gear drive and a third pulley mounted on the shaft of the mechanical charger.

Furthermore, patent US7950231 B2 discloses a low emission compound turbine engine comprising an air intake and an exhaust duct for products of combustion, in addition to a pair of turbochargers which receive the combustion products in a series relationship and an exhaust aftertreatment device, such as a particle filter, for receiving products of the combustion from the downstream turbine. A power turbine receives the output from the exhaust aftertreatment device and an exhaust gas recirculation system is downstream from and exposed to the outlet of the power turbine, it passes selectively a selected portion of the output to a point downstream of the turbocharger supercharger. A device adds fuel to the aftertreatment device to regenerate the particulate filter and the power turbine recoups the additional energy. The power turbine may be used to drive accessories or the prime output of the engine. The system may selectively add fuel for the exhaust aftertreatment device to temporarily increase the energy drive accessories for the engine or the addition to the prime output of the engine.

However, these systems only make use of a small part of the energy of the exhaust gases, mainly their kinetic energy, since the exhaust gases are still at very high temperatures at the turbine outlet which actuates the electric generator, and therefore, does not make appropriate use of the thermal energy of the exhaust gases of the internal combustion engine.

This problem is especially shown in internal combustion engines according to a supercharged Otto cycle.

The present invention proposes a compound engine which increases thermal efficiency and reduces the contaminating emissions with respect to known engines of the state of the art.

### DESCRIPTION OF THE INVENTION

The compound engine of the present invention comprises an internal combustion engine and a first turbine which has a high thermal efficiency and low emissions of pollutants since it makes use of the residual heat from the exhaust gases of the internal combustion engine to heat at constant pressure the air which supplies a turbine, which, in turn, actuates an electric generator or transmits the energy to the crankshaft of the internal combustion engine.

The internal combustion engine may be both 2 stroke and 4 stroke, preferably 4 stroke, with spark ignition, or with compression ignition, atmospheric or supercharged among others, fed by liquid or gaseous fuel or a combination of both, comprising at least one piston displaceable through the interior of a cylinder, at least one intake valve, an exhaust valve and a transfer valve.

The compound engine of the present invention comprises an internal combustion engine, where the air admitted in the intake stroke is compressed in a first compression phase until a compression ratio less than the maximum compression ratio of the internal combustion engine, and subsequently a first part of that compressed air is transferred, in a transfer phase, through a transfer valve, to a compressed air storage tank.

Said first part of the compressed air transferred to the storage tank constitutes the working fluid of a bottom cycle which receives the heat at constant pressure from the exhaust gases of a top cycle which is described below, from the internal combustion engine and it later expands in the turbine which actuates the electric generator or rather transfers the energy to the crankshaft of the internal combustion engine.

The part of air remaining in the cylinder (or second part of air), is used, once the transfer phase to the compressed air storage tank is finalized, in a top cycle which is performed in the internal combustion engine.

Said second part of air continues to be compressed in the combustion engine in a second compression phase until the maximum compression ratio of the internal combustion engine, followed by an expansion phase, with spark or compression ignition, where said second part of air overexpands, and followed by an exhaust phase.

The exhaust gases from the internal combustion engine of the top cycle are conducted to a heat exchanger where they transfer heat at a constant pressure to the compressed air of the bottom cycle and finally they expand in the turbine. Therefore, the bottom cycle air follows a Brayton or Joule cycle.

This manages to lower the temperature of the exhaust gases of the internal combustion engine and it makes use of its energy to improve the thermal efficiency of the compound engine.

Furthermore, the overexpansion which occurs in the expansion stroke of the internal combustion engine achieves a more complete combustion and improvement of the thermal efficiency.

### BRIEF DESCRIPTION OF THE DRAWINGS

Figure 1 shows a diagrammatic view of the cylinder and piston of the compound engine of the present invention during the intake stroke.
Figure 2 shows a diagrammatic view of the cylinder and the piston of the compound engine of the present invention during the first compression phase.
Figure 3 shows a diagrammatic view of the cylinder, the piston and the compressed air tank of the compound engine of the present invention during the transfer phase.
Figure 4 shows a diagrammatic view of the cylinder and the piston of the compound engine of the present invention during the second compression phase.
Figure 5 shows a diagrammatic view of the cylinder and the piston of the compound engine of the present invention during the expansion stroke.
Figure 6 shows a diagrammatic view of the compound engine of the present invention during the exhaust stroke.
Figure 7 shows a diagrammatic view of the compound engine of the present invention, formed by an internal combustion engine with atmospheric supply and turbine for expansion of the bottom cycle air equipped with mechanical transmission for the transfer of energy generated by said turbine to the crankshaft of the internal combustion engine.
Figure 8 shows a diagrammatic view of the compound engine of the present invention, formed by an internal combustion engine with atmospheric supply and turbine for expansion of the bottom cycle air which actuates an electric generator.
Figure 9 shows a diagrammatic view of the compound engine of the present invention, formed by an internal combustion engine supercharged by means of positive displacement supercharger and turbine for expansion of the bottom cycle air equipped with mechanical transmission for transmission of the energy generated by said turbine to the crankshaft of the internal combustion engine.
Figure 10 shows a diagrammatic view of the compound engine of the present invention, formed by an internal combustion engine supercharged by means of positive displacement supercharger and by turbine for expansion of the bottom cycle air equipped with mechanical transmission for transmission of the energy generated by said turbine to the crankshaft of the internal combustion engine, equipped with an additional turbine for expansion of the top cycle exhaust gases coaxially mounted with the turbine for expansion of the bottom cycle air.
Figure 11 shows a diagrammatic view of the compound engine of the present invention formed by an internal combustion engine supercharged by means of supercharger actuated by turbine wherein it expands the bottom cycle air and which is equipped with mechanical transmission for transmission of the energy generated by said turbine to the crankshaft of the internal combustion engine.
Figure 12 shows a diagrammatic view of the compound engine of the present invention formed by an internal combustion engine supercharged by means of turbocharger which is actuated by the bottom cycle air, said turbocharger being equipped with a short-circuit valve and with a shunt or bypass line which bypasses the excess energy from the bottom cycle air towards a turbine wherein it expands said bottom cycle air, said turbine being equipped with mechanical transmission for transmission of the energy generated to the crankshaft of the internal combustion engine.
Figure 13 shows a diagrammatic view of a part of the compound engine of the present invention comprising an auxiliary supercharger mechanically or electrically actuated designed to supply the compressed air tank of the bottom cycle.

### DETAILED DESCRIPTION OF THE INVENTION

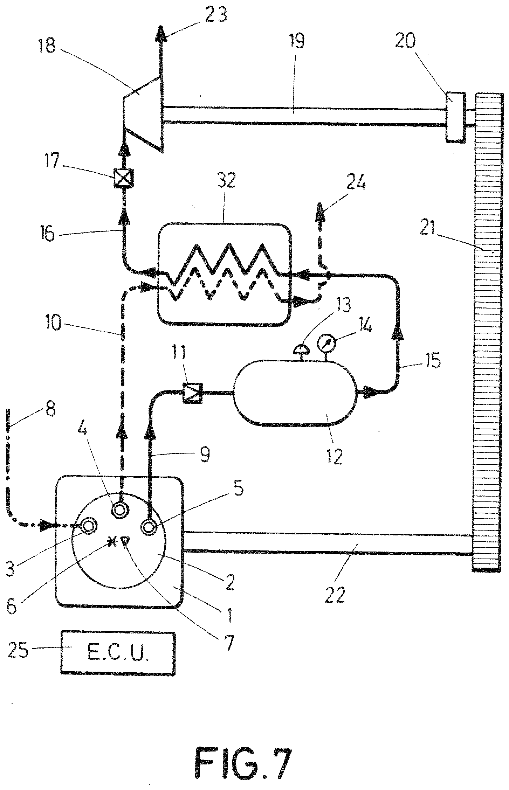

Below, a detailed description is given of the compound engine of the present invention according to a first example of embodiment shown in figure 7. The compound engine which works with a top cycle and a bottom cycle comprises an internal combustion engine (1) comprising, in turn, an air intake duct (8), an intake valve (3), an exhaust valve (4), a transfer valve (5), an injector (6) and a spark plug (7) in the case of spark ignition engines, a crankshaft (22), an exhaust duct (10).

The compound engine further comprises a compressed air storage tank (12), a transfer duct (9) of air from the cylinder (2) to the storage tank (12), an unidirectional valve (11), a safety-relief valve (13), a pressure sensor (14), a heat exchanger (32), a transfer duct (15) of air from the storage tank (12) to the heat exchanger (32), a turbine (18) equipped with a shaft (19), a supply pipe (16) of compressed bottom cycle air of the turbine (18), a coupling (20) of the shaft (19) of the turbine (18) to a reducing mechanical transmission (21), a flow-regulating valve (17), an exhaust duct (23) of bottom cycle air, an exhaust duct (24) of top cycle exhaust gases and an electronic control unit (25).

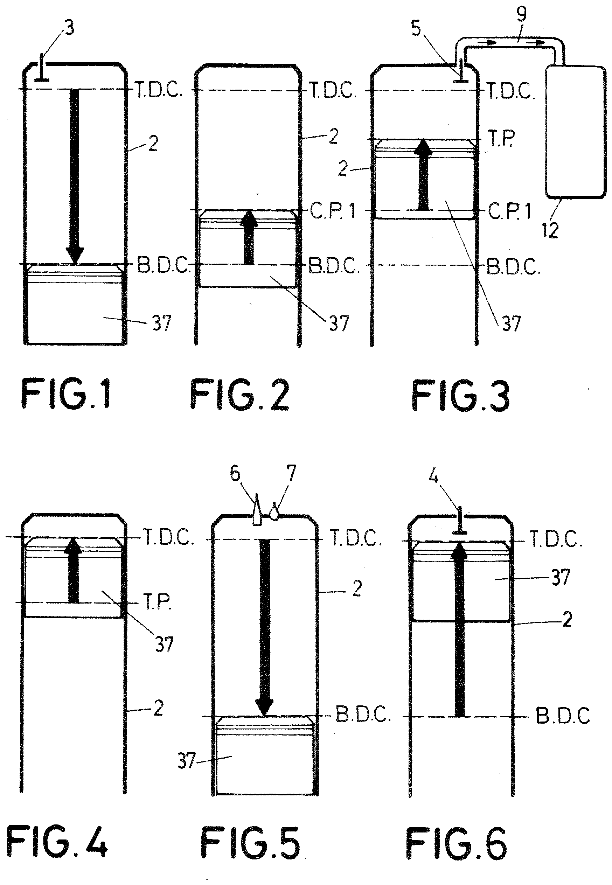

The cycle phases as a piston (37) is displaced in a cylinder (2) of the internal combustion engine of the compound engine of the present invention, according to figures 1 to 6, is as follows:

### I- Intake stroke (Figure 1)

The piston (37) is displaced from the Top Dead Centre (TDC) to the Bottom Dead Centre (BDC) within the cylinder (2). The intake valve (3) remains open whilst the other valves, the exhaust valve (4) and the transfer valve (5), remain closed and the air enters the cylinder (2).

A part of the air admitted in the cylinder (2) shall follow the top cycle of the internal combustion engine and another part of the air shall follow the Brayton - Joule bottom cycle with heating at constant pressure with the heat provided by the exhaust gases of the internal combustion engine.

### II-1 Compression Stroke - First compression phase (Figure 2)

The intake valve (3) closes and the remaining valves, the exhaust valve (4) and the transfer valve (5), remain closed. The piston (37) is displaced from the BDC until a first compression point CP1 situated between the BDC and the TDC the situation of which is variable and its position is determined by the electronic control unit, ECU (25), until a first pre-established compression level.

### II-2 Compression Stroke - Transfer phase (Figure 3)

The piston (37) is displaced from the first compression point CP1 until a transfer point TP. In the start of this phase the piston (37) is in the first compression point CP1 and then the transfer valve (5) opens when the pressure in the cylinder is similar to a determined pressure equal to that of the compressed air tank (12). The transfer valve (5) remains open until the transfer point TP causing a transfer, at approximately constant pressure of the air compressed in the previous stage, from the cylinder (2) towards the compressed air tank (12). When the piston (37) reaches the transfer point TP the transfer valve (5) closes. This air transferred to the compressed air tank (12) is that which follows the bottom cycle.

### II-3 Compression Stroke - Second compression phase (Figure 4)

The intake valve (3), the exhaust valve (4) and the transfer valve (5), remain closed and the piston (37) is displaced from the transfer point TP until the TDC point. The air remaining in the cylinder (2) continues to be compressed until the maximum compression established in the cycle. This air remaining is that which follows the top cycle in the internal combustion engine.

In the case of spark ignition, the fuel injection occurs throughout the route from the piston from the transfer point TP until the TDC point, in the second compression phase, through the injector (6).

In the case of compression ignition, the fuel injection through the injector (6) occurs at the end of the second compression stroke and start of the expansion stroke.

### III- Expansion stroke (Figure 5)

In the case of a spark-ignition engine, when the piston (37) is approximately at the TDC the ignition of the mixture of air and fuel begins by means of the actuation of the spark plug (7).

In the case of compression ignition engines, when the piston approaches the TDC the injection of fuel through the injector (6) starts.

The valves (3, 4, 5) remain closed and the combustion gases expand with an expansion ratio much higher than the compression ratio of the Top Cycle.

### IV- Exhaust Stroke (Figure 6)

When the piston (37) is close to the BDC point, the exhaust valve (4) opens and the exhaust gases exit the cylinder (2). This mass of gases has followed the top cycle of the internal combustion engine, which at the end of the exhaust stroke finalizes the top cycle and moves towards the heat exchanger (32) where it transfers heat at constant pressure to the fluid which follows the bottom cycle. The exhaust gases at the instant of opening the exhaust valve (4) are still at a high temperature and relatively low pressure, since they have expanded in the cylinder with a much greater expansion ratio than compression ratio.

A heat exchange occurs in the heat exchanger (32) of the bottom cycle, preferably counterflow heat exchanger, where the exhaust gases of the internal combustion engine transfer an important part of their thermal energy to the compressed air coming from the compressed air tank (12).

The compressed air of said compressed air tank (12) has been compressed and transferred from the cylinder up to the compressed air tank (12) throughout stroke II-1 (first compression phase) and II-3 (second compression phase) described above and undergoes a Brayton -Joule thermodynamic cycle with isobaric heating stage in the exchanger (32) with the heat from the top cycle exhaust gases from the internal combustion engine (1).

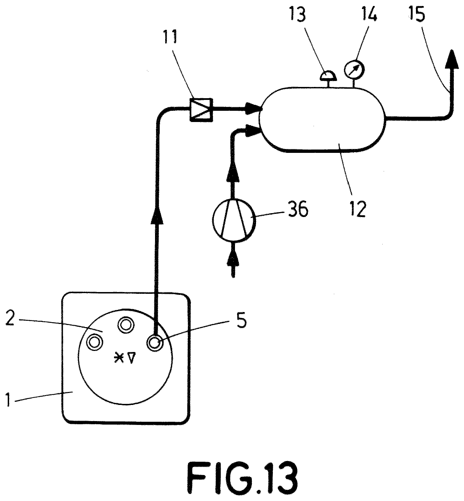

Optionally, the compound engine may comprise an auxiliary supercharger (36) designed to stabilize the pressure of the compressed air tank (12), as observed in figure 13, and it can be actuated either mechanically from the crankshaft (22) or electrically.

Therefore, a heat exchange occurs in the exchanger (32), preferably counterflow exchanger, wherein two fluids intervene: on the one hand, the top cycle exhaust gases from the internal combustion engine (1), and on the other the fluid from the compressed air tank (12), that performs the bottom cycle.

Both fluids move in the exchanger in opposite directions so that the exhaust gases progressively transfer heat to the compressed air whilst the pressure of the compressed air remains appreciably constant by means of the opening or closure of the flow-regulating valve (17) at the intake of the turbine (18). The flow-regulating valve may be a variable geometry distributor placed at the intake of the turbine (18).

Once the compressed air exits the exchanger (32) it has already absorbed an important part of the heat from the exhaust gases and heads towards the turbine (18). Said turbine (18) may be a Variable Geometry Turbine (VGT) or rather be equipped with a flow-regulating valve (17) which controls the intake of compressed air towards the turbine (18).

The electronic control unit (25) controls at all times the opening and closure of the transfer valve (5) and the supply of the turbine (18) by means of the opening and closure of the flow-regulating valve (17) or rather by means of the variable geometry distributor of the turbine. The electronic control unit (25) also controls the actuation of the auxiliary supercharger (36) if installed, so that the pressure from the compressed air circuit which supplies the turbine (18) remains approximately constant within the established range.

The compressed air expands in the turbine (18) and transfers its kinetic energy to the crankshaft (22) of the internal combustion engine (1) by means of the reducing mechanical transmission (21) and coupling (20), as observed in figure 7.

### Other embodiments of the invention

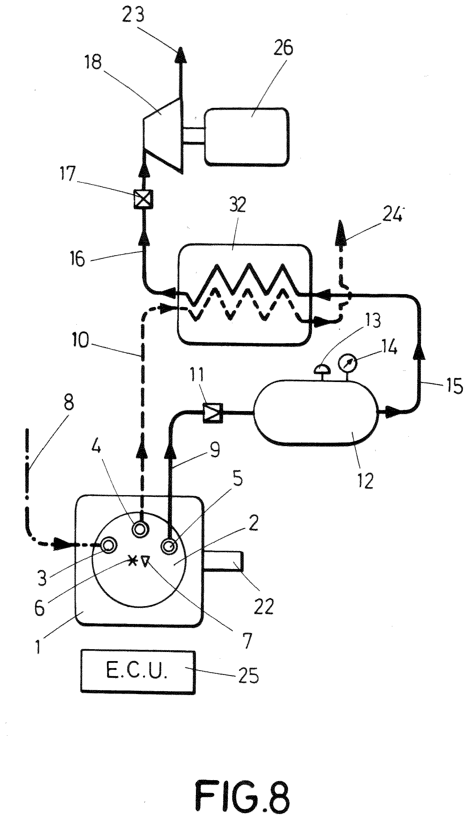

In the embodiment shown in figure 8, a diagrammatic view is shown of the compound engine formed by the internal combustion engine (1) with atmospheric supply and the turbine (18) for expansion of the bottom cycle air which actuates an electric generator (26).

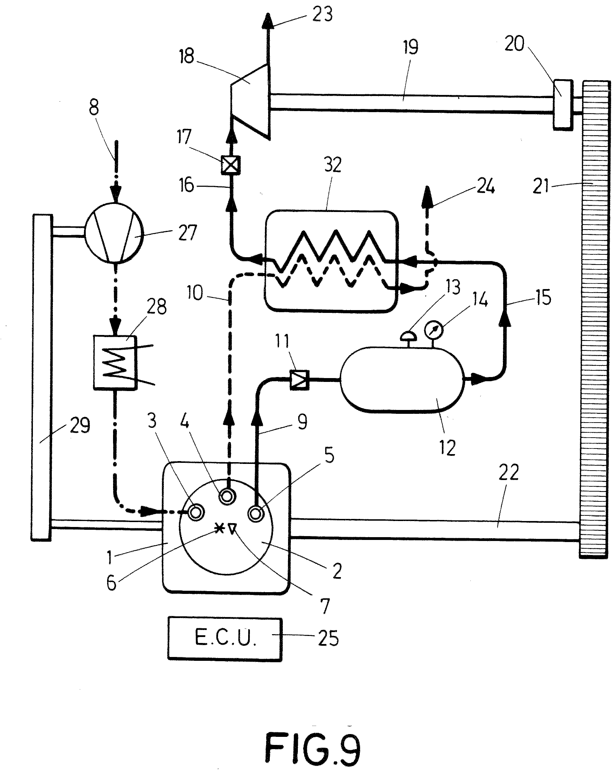

In the embodiment shown in figure 9, a diagrammatic view is shown of the compound engine formed by the internal combustion engine (1) supercharged by means of a positive displacement supercharger (27) equipped with an exchanger (28) for cooling of the intake air and the turbine (18) for expansion of the bottom cycle air equipped with mechanical transmission (21) for transmission of the energy generated by said turbine to the crankshaft (22) of the internal combustion engine (1). The positive displacement supercharger (27) is actuated by the internal combustion engine (1) by means of a mechanical transmission (29).

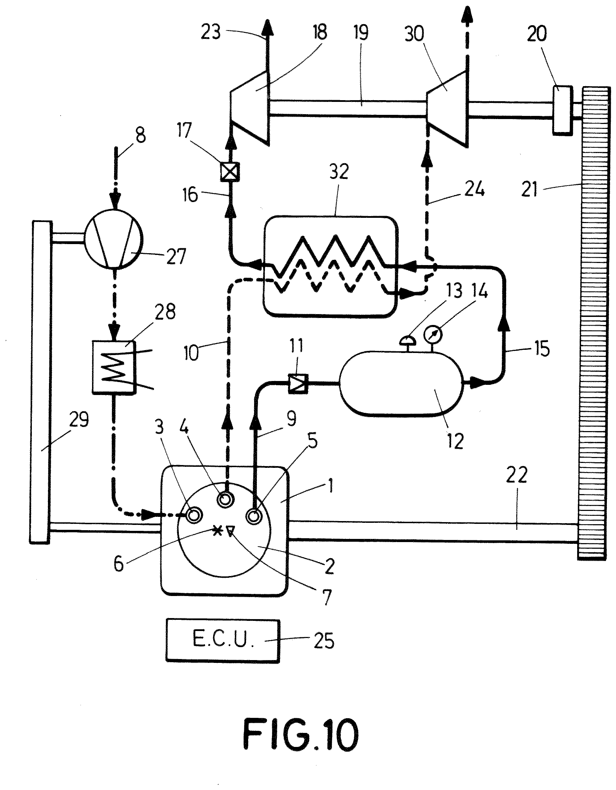

In the embodiment shown in figure 10, a diagrammatic view is shown of the compound engine formed by the internal combustion engine (1) supercharged by means of positive displacement supercharger (27) equipped with an exchanger (28) for cooling of the intake air and the turbine (18) for expansion of the bottom cycle air equipped with mechanical transmission (21) for transmission of the energy generated by said turbine to the crankshaft (22) of the internal combustion engine (1), equipped with a second turbine (30) for expansion of the top cycle exhaust gases coaxially mounted with the turbine (18) for expansion of the bottom cycle air.

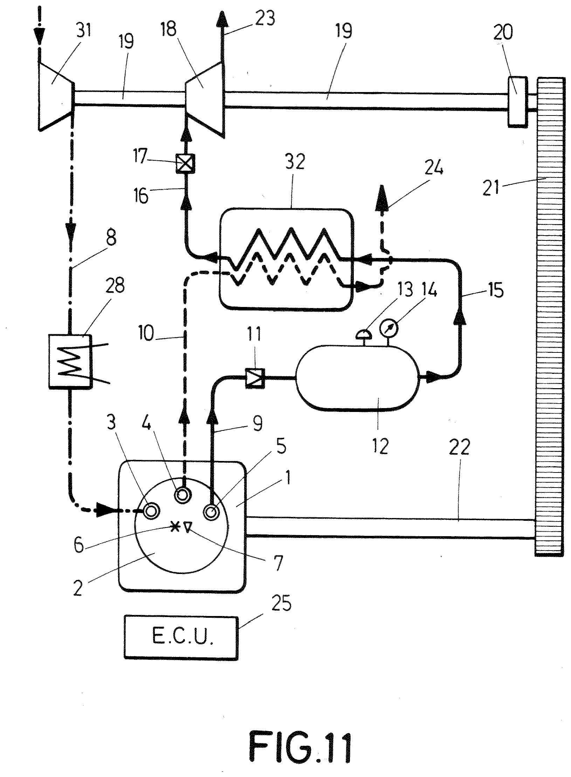

In the embodiment shown in figure 11, a diagrammatic view is shown of the compound engine formed by an internal combustion engine (1) supercharged by means of supercharger (31) actuated by the turbine (18) for expansion of the bottom cycle air equipped with mechanical transmission (21) for transmission of the energy generated by said turbine to the crankshaft (22) of the internal combustion engine (1).

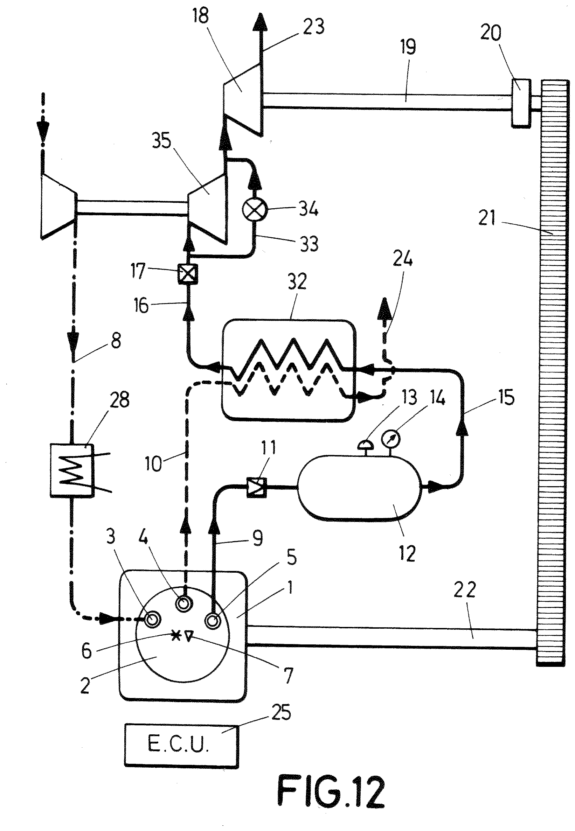

In the embodiment shown in figure 12, a diagrammatic view is shown of the compound engine formed by an internal combustion engine (1) supercharged by means of turbocharger (35) which is actuated by the bottom cycle air, said turbocharger (35) being equipped with a short-circuit valve (34) and with a shunt or bypass line (33) which bypasses the excess energy from the bottom cycle air towards a turbine (18) for expansion of the bottom cycle air, equipped with mechanical transmission (21) for transmission of the energy generated by said turbine to the crankshaft (22) of the internal combustion engine (1).

In the embodiment shown in figure 13, a diagrammatic view is shown of a part of the compound engine comprising an auxiliary supercharger (36) mechanically or electrically actuated designed to supply the compressed air tank (12) of the bottom cycle.

It is noted that the compound engine solution proposed in the present invention is not based on the number of cylinders of the internal combustion engine. All phases of the compound cycle described above are performed by each and every one of the cylinders of the internal combustion engine. Therefore, it is a functional solution in single-cylinder engines, as shown in the figures, or in engines with several cylinders.

In terms of the valve leads and lags, it must be indicated that the opening and closing moments of the intake valves of the internal combustion engine indicated in the present description are the theoretical moments which coincide with the Top Dead Centre (Opening of intake valve and closure of exhaust valve) and the Bottom Dead Centre (Closure of intake valve and opening of exhaust valve). In practice, the leads shall be used in the opening of the intake and opening of the exhaust, and lags in the closure of the intake and closure of the exhaust which are most convenient.

The injection and ignition moments in the present description are theoretical moments which will be corrected with the corresponding injection and ignition leads which are most convenient.

## Claims

1. Compound engine comprising an internal combustion engine (1) and a first turbine (18), where the internal combustion engine (1) comprises at least one piston (37) displaceable through the interior of a cylinder (2), at least one intake valve (3) and an exhaust valve (4) **characterized in that** in the internal combustion engine (1) the air admitted in an intake stroke is compressed in a first compression phase until a compression ratio less than the maximum compression ratio of the internal combustion engine (1), and subsequently a first part of that compressed air, is transferred, in a transfer phase, through a transfer valve (5), to a compressed air storage tank (12) of the compound engine, where said first part of the compressed air transferred to the storage tank (12) constitutes the working fluid of a bottom cycle which receives the heat at constant pressure from the exhaust gases of a top cycle from the internal combustion engine (1), and later it expands in the turbine (18) which actuates an electric generator (26) or rather transfers the energy to the crankshaft (22) of the internal combustion engine (1), and where the part of air remaining in the cylinder (2), or second part of air is used, once the transfer phase to the compressed air storage tank (12) is finalized, in the top cycle which is performed in the internal combustion engine (1), since said second part of air continues to be compressed in the internal combustion engine (1) in a second compression phase until the maximum compression ratio of the internal combustion engine (1), followed by an expansion stroke, where said second part of air overexpands, and by an exhaust stroke, and where the exhaust gases of the internal combustion engine (1) of the top cycle are conducted to a heat exchanger (32) where they transfer heat at a constant pressure to the compressed bottom cycle air that finally expands in the turbine (18).

2. Compound engine according to claim 1, comprising a positive displacement supercharger (27) which supercharges the internal combustion engine (1) and an exchanger (28) for cooling of the intake air to said internal combustion engine (1), where the positive displacement supercharger (27) is actuated by the internal combustion engine (1) by means of a mechanical transmission (29).

3. Compound engine according to any of the preceding claims, comprising a second turbine (30) for expansion of the top cycle exhaust gases coaxially mounted with the turbine (18) for expansion of the bottom cycle air.

4. Compound engine according to claim 1, comprising a supercharger (31) actuated by the turbine (18) for expansion of the bottom cycle air.

5. Compound engine according to claim 1, comprising a turbocharger (35) which is actuated by the bottom cycle air, said turbocharger (35) being equipped with a short-circuit valve (34) and with a shunt or bypass line (33) which bypasses the excess energy from the bottom cycle air towards a turbine (18) for expansion of the bottom cycle air.

6. Compound engine according to any of the preceding claims, comprising an auxiliary supercharger (36), mechanically or electrically actuated, designed to supply the compressed air tank (12) of the bottom cycle.

7. Compound engine according to any of the preceding claims comprising an electronic control unit (25) which controls at all times the opening and closure of the transfer valve (5) and the supply of the turbine (18) by means of the opening and closure of a flow-regulating valve (17) or rather by means of a variable geometry distributor of the turbine.

8. Compound engine according to claims 6 and 7, wherein the electronic control unit (25) also controls the actuation of the auxiliary supercharger (36).

9. Compound engine according to any of the preceding claims, wherein the internal combustion engine (1) is a spark-ignition engine.

10. Compound engine according to claim 9, wherein the injection of a fuel occurs throughout the route from the piston (37) during the second compression stroke, through an injector (6).

11. Compound engine according to any of claims 1 to 8, wherein the internal combustion engine (1) is a compression-ignition engine.

12. Compound engine according to claim 11, wherein the injection of a fuel through an injector (6) occurs at the final of the second compression phase and start of the expansion stroke.

13. Compound engine according to any of the preceding claims, wherein the internal combustion engine (1) is 2 stroke, 4 stroke, atmospheric or supercharged.

## Patentansprüche

1. Verbundbrennkraftmaschine, welche eine Verbrennungskraftmaschine (1) und eine erste Turbine (18) umfasst, wobei die Verbrennungskraftmaschine (1) mindestens einen Kolben (37), welcher durch den Innenraum eines Zylinders (2) verschiebbar ist, mindestens ein Einlassventil (3) und ein Auslassventil (4) umfasst, **dadurch gekennzeichnet, dass** in der Verbrennungskraftmaschine (1) die in einem Einlasstakt eingelassene Luft in einer ersten Verdichtungsphase zu einem Verdichtungsverhältnis niedriger als das maximale Verdichtungsverhältnis der Verbrennungskraftmaschine (1) verdichtet wird und dass ein erster Teil dieser verdichteten Luft anschließend durch ein Übertragungsventil (5) an einen Speichertank der verdichteten Luft (12) der Verbundbrennkraftmaschine in einer Übertragungsphase übertragen wird, wobei der erste Teil der verdichteten Luft, welche an den Speichertank (12) übertragen wird, das Arbeitsfluid eines Bottoming-Zyklus darstellt, welches die Wärme unter konstantem Druck von den Abgasen eines Topping-Zyklus von der Verbrennungskraftmaschine (1) empfängt, und dieser sich anschließend in der Turbine (18) ausdehnt, welche einen elektrischen Generator (26) antreibt, oder eher die Energie an die Kurbelwelle (22) der Verbrennungskraftmaschine (1) überträgt, und wobei der Teil der Luft, welche in dem Zylinder (2) verbleibt, bzw. der zweite Teil der Luft nach Abschluss der Übertragungsphase an den Speichertank der verdichteten Luft (12) in dem Topping-Zyklus, welche in der Verbrennungskraftmaschine (1) durchgeführt wird, verwendet wird, da der zweite Teil der Luft weiter in der Verbrennungskraftmaschine (1) zu dem maximalen Verdichtungsverhältnis der Verbrennungskraftmaschine (1) in einer zweiten Verdichtungsphase verdichtet wird, welche von einem Ausdehnungstakt, wobei sich der zweite Teil der Luft überdehnt, und von einem Ausstoßtakt gefolgt wird, und wobei die Abgase der Verbrennungskraftmaschine (1) des Topping-Zyklus an einen Wärmetauscher (32) geleitet werden, wobei sie Wärme unter einem konstanten Druck an die verdichtete Luft des Bottoming-Zyklus, welche sich schließlich in der Turbine (18) ausdehnt, übertragen.

2. Verbundbrennkraftmaschine nach Anspruch 1, welche einen Verdrängerlader (27), der die Verbrennungskraftmaschine (1) auflädt, und einen Tauscher (28) zum Kühlen der Einlassluft der Verbrennungskraftmaschine (1) umfasst, wobei der Verdrängerlader (27) durch die Verbrennungskraftmaschine (1) mittels einer mechanischen Übertragung (29) angetrieben wird.

3. Verbundbrennkraftmaschine nach einem der vorhergehenden Ansprüche, welche eine zweite Turbine (30) zur Ausdehnung der Abgase des Topping-Zyklus umfasst, die koaxial mit der Turbine (18) zur Ausdehnung der Luft des Bottoming-Zyklus montiert ist.

4. Verbundbrennkraftmaschine nach Anspruch 1, welche einen Auflader (31) umfasst, der durch die Turbine (18) zur Ausdehnung der Luft des Bottoming-Zyklus angetrieben wird.

5. Verbundbrennkraftmaschine nach Anspruch 1, welche einen Turbolader (35) umfasst, der durch die Luft des Bottoming-Zyklus angetrieben wird, wobei der Turbolader (35) mit einem Kurzschlussventil (34) und mit einer Abzweig- oder Nebenschlussleitung (33), welche die überschüssige Energie von der Luft des Bottoming-Zyklus zu einer Turbine (18) zur Ausdehnung der Luft des Bottoming-Zyklus umleitet, ausgestattet ist.

6. Verbundbrennkraftmaschine nach einem der vorhergehenden Ansprüche, welche einen zusätzlichen mechanisch oder elektrisch angetriebenen Auflader (36) umfasst, der zum Versorgen des Tanks der verdichteten Luft (12) des Bottoming-Zyklus ausgelegt ist.

7. Verbundbrennkraftmaschine nach einem der vorhergehenden Ansprüche, welche eine elektronische Steuereinheit (25) umfasst, die jederzeit das Öffnen und Schließen des Übertragungsventils (5) und die Versorgung der Turbine (18) mittels des Öffnens und Schließens eines Strömungsregelventils (17) oder eher mittels eines Verteilers mit variabler Geometrie der Turbine steuert.

8. Verbundbrennkraftmaschine nach Anspruch 6 und 7, wobei die elektronische Steuereinheit (25) auch den Antrieb des zusätzlichen Aufladers (36) steuert.

9. Verbundbrennkraftmaschine nach einem der vorhergehenden Ansprüche, wobei die Verbrennungskraftmaschine (1) ein Motor mit Fremdzündung ist.

10. Verbundbrennkraftmaschine nach Anspruch 9, wobei das Einspritzen eines Kraftstoffs während des zweiten Verdichtungstakts entlang der Strecke von dem Kolben (37) durch einen Injektor (6) erfolgt.

11. Verbundbrennkraftmaschine nach einem der Ansprüche 1 bis 8, wobei die Verbrennungskraftmaschine (1) ein Motor mit Selbstzündung ist.

12. Verbundbrennkraftmaschine nach Anspruch 11, wobei das Einspritzen eines Kraftstoffs durch einen Injektor (6) am Ende der zweiten Verdichtungsphase und am Anfang des Ausdehnungstakts erfolgt.

13. Verbundbrennkraftmaschine nach einem der vorhergehenden Ansprüche, wobei die Verbrennungskraftmaschine (1) eine Zweitakt-, Viertakt-, Saug- oder Aufladebrennkraftmaschine ist.

## Revendications

1. Moteur compound comprenant un moteur à combustion interne (1) et une première turbine (18), où le moteur à combustion interne (1) comprend au moins un piston (37) déplaçable par l'intérieur d'un cylindre (2), au moins une soupape d'admission (3) et une soupape d'échappement (4) **caractérisé en ce que** dans le moteur à combustion interne (1) l'air admis dans une course d'admission est comprimé dans une première phase de compression jusqu'à un taux de compression plus petit que le taux de compression maximum du moteur à combustion interne (1), et ultérieurement une première partie de cet air comprimé, est transféré, dans une phase de transfert, à travers une soupape de transfert (5), à un réservoir de stockage d'air comprimé (12) du moteur compound, où ladite première partie d'air comprimé transféré au réservoir de stockage (12) constitue le fluide de travail d'un cycle inférieur qui reçoit la chaleur à une pression constante des gaz d'échappement d'un cycle supérieur du moteur à combustion interne (1), puis il est en expansion dans la turbine (18) qui actionne un générateur électrique (26) ou transfert l'énergie au vilebrequin (22) du moteur à combustion interne (1), et où la partie d'air restant dans le cylindre (2), ou deuxième partie d'air est utilisée, une fois que le temps de transfert au réservoir de stockage d'air comprimé (12) est terminé, dans le cycle supérieur qui est réalisé dans le moteur à combustion interne (1), étant donné que ladite deuxième partie d'air continue d'être comprimé dans le moteur à combustion interne (1) dans un deuxième temps de compression jusqu'au taux de compression maximum du moteur à combustion interne (1), suivi d'une course d'expansion, où ladite deuxième partie d'air est en surexpansion, et par une course d'échappement, et où les gaz d'échappement du moteur à combustion interne (1) du cycle supérieur sont conduits à un échangeur de chaleur (32) où ils transfèrent de la chaleur à une pression constante à l'air du cycle inférieur comprimé qui est finalement expansé dans la turbine (18).

2. Moteur compound selon la revendication 1, comprenant un suralimenteur à déplacement positif (27) qui suralimente le moteur à combustion interne (1) et un échangeur (28) pour le refroidissement de l'air d'admission audit moteur à combustion interne (1), où le suralimenteur à déplacement positif (27) est actionné par le moteur à combustion interne (1) au moyen d'une transmission mécanique (29).

3. Moteur compound selon l'une quelconque des revendications précédentes, comprenant une deuxième turbine (30) pour l'expansion des gaz d'échappement du cycle supérieur coaxialement montée avec la turbine (18) pour l'expansion de l'air du cycle inférieur.

4. Moteur compound selon la revendication 1, comprenant un suralimenteur (31) actionné par la turbine (18) pour l'expansion de l'air du cycle inférieur.

5. Moteur compound selon la revendication 1, comprenant un turbocompresseur (35) qui est actionné par l'air du cycle inférieur, le turbocompresseur (35) étant équipé d'une soupape de court-circuit (34) et avec une ligne de shunt ou de dérivation (33) qui dérive l'énergie excédentaire de l'air du cycle inférieur vers une turbine (18) pour l'expansion de l'air du cycle inférieur.

6. Moteur compound selon l'une quelconque des revendications précédentes, comprenant un suralimenteur auxiliaire (36), actionné mécaniquement ou électriquement, conçu pour approvisionner le réservoir d'air comprimé (12) du cycle inférieur.

7. Moteur compound selon l'une quelconque des revendications précédentes comprenant une unité de commande électronique (25) qui commande à tout moment l'ouverture et la fermeture de la soupape de transfert (5) et l'approvisionnement de la turbine (18) au moyen de l'ouverture et de la fermeture d'une soupape régulateur de débit (17) ou au moyen d'un distributeur à géométrie variable de la turbine.

8. Moteur compound selon les revendications 6 et 7, dans lequel l'unité de commande électronique (25) commande également l'actionnement du suralimenteur auxiliaire (36).

9. Moteur compound selon l'une quelconque des revendications précédentes, dans lequel le moteur à combustion interne (1) est un moteur à allumage commandé.

10. Moteur compound selon la revendication 9, dans lequel l'injection d'un carburant a lieu tout au long du parcours du piston (37) pendant la deuxième course de compression, par un injecteur (6).

11. Moteur compound selon l'une quelconque des revendications 1 à 8, dans lequel le moteur à combustion interne (1) est un moteur à allumage par compression.

12. Moteur compound selon la revendication 11, dans lequel l'injection d'un carburant par un injecteur (6) a lieu à la fin du deuxième temps de compression et au début de la course d'expansion.

13. Moteur compound selon l'une quelconque des revendications précédentes, dans lequel le moteur à combustion interne (1) est à 2 courses, 4 courses, atmosphérique ou suralimenté.
